# EUROPÄISCHE PATENTSCHRIFT

(11) **EP 2 567 122 B1**
(45) Veröffentlichungstag und Bekanntmachung des Hinweises auf die Patenterteilung: **03.06.2020**
(21) Anmeldenummer: 11710770.6
(22) Anmeldetag: 24.03.2011
(51) Int. Cl.: F16G 1/10, F16G 1/28

(54) **KRAFTÜBERTRAGUNGSRIEMEN, INSBESONDERE ZAHNRIEMEN**
POWER TRANSMISSION BELT, IN PARTICULAR TOOTHED BELT
COURROIE DE TRANSFERT DE FORCE, NOTAMMENT COURROIE CRANTÉE

(30) Priorität: 07.07.2010 DE 102010017782; 03.05.2010 DE 102010016757
(43) Veröffentlichungstag der Anmeldung: 13.03.2013
(73) Patentinhaber: ContiTech Antriebssysteme GmbH, 30165 Hannover (DE)
(72) Erfinder: WELL, Michael, 38159 Vechelde (DE); TEVES, Reinhard, 30926 Seelze (DE)
(74) Vertreter: Preusser, Andrea
(86) Internationale Anmeldenummer: PCT/EP2011/054508
(87) Internationale Veröffentlichungsnummer: WO 2011/138088

(56) Entgegenhaltungen:
- EP-A1- 0 674 121
- EP-A1- 1 239 004
- EP-A2- 2 006 574
- WO-A2-2008/070878
- DE-A1-102008 033 267
- US-A- 5 698 650
- US-A1- 2002 187 869
- US-B1- 6 491 598
- DEUTSCHE INSTITUT FÜR NORMUNG: "Beschichtungsstoffe und Beschichtungen - Ergänzende Begriffe zu DIN EN ISO 4618", DEUTSCHE NORMEN. DIN NORM,, Nr. 55945, 1. März 2007 (2007-03-01), XP008128686, [gefunden am 2007-03-01]
- "DIN EN ISO 4618 - Beschichtungsstoffe. Begriffe (ISO 4618:2006); Dreisprachige Fassung EN ISO 4618:2006 = Paints and varnisches. Terms and definitions (ISO 4618:2006); Trilingual version EN ISO 4618:2006 = Peintures et vernis. Termes et definitions (ISO 4618:2006); Version trilingue EN ISO 4618:2006", DEUTSCHE NORMEN. DIN NORM,, Bd. 4618, 1. März 2007 (2007-03-01), XP009101893,

## Beschreibung

Die Erfindung betrifft einen Kraftübertragungsriemen mit einem elastischen Grundkörper, umfassend eine Decklage als Riemenrücken und einen Unterbau mit einer Kraftübertragungszone.

Kraftübertragungsriemen, die auch als Antriebsriemen bezeichnet werden und im Funktionszustand zumeist endlos geschlossen sind, können als Flachriemen, Keilriemen, Keilrippenriemen und Zahnriemen ausgebildet sein.

Die Elastizität eines Antriebsriemens wird dadurch erreicht, dass der Grundkörper und somit die Decklage und der Unterbau aus einem polymeren Werkstoff mit elastischen Eigenschaften bestehen, wobei hier insbesondere die beiden Werkstoffgruppen Elastomere und thermoplastische Elastomere zu nennen sind. Von besonderer Bedeutung sind Elastomere auf der Basis einer vulkanisierten Kautschukmischung.
Insbesondere die Kautschukmischungen, die in einem elastischen Grundkörper eines Zahnriemens Verwendung finden, müssen eine gute Fließfähigkeit besitzen, um während der Vulkanisation durch die gespulte Zugstrangebene zu fließen und die Zähne auszuformen. Sollen diese Zähne sehr hart sein, um höheren mechanischen Belastungen standhalten zu können und somit die Lebensdauer zu verlängern, so gelingt dies in der Regel lediglich durch die Erhöhung des Füllstoffanteils, beispielsweise durch Hinzufügen von Kurzfasern, in der Kautschukmischung und / oder durch gezielte Erhöhung der Vernetzungsausbeute. Dadurch steiget die Viskosität der Rohmischung stark an und führt dazu, dass die Fließfähigkeit nicht mehr ausreicht, um die Zähne auszuformen. Dieser Effekt ist oft dann zu finden, wenn anlagenbedingt die Vulkanisationsdrücke gering sind. Ebenso wird versucht über spezielle Polymere oder definierte Polymerkombinationen

Einfluss auf die Härte der Kautschukmischung zu nehmen. Hier sei an dieser Stelle auf die entsprechenden Veröffentlichungen, wie beispielsweise DE 10 2004 052 255 A1, DE 60 2005 006 210 T2, DE 26 15 656 A1, DE 699 15 095 T3, DE 692 31 029 T2, DE 695 02 430 T2 und EP 0 547 880 A1, verwiesen.

US 5 698 650 A1, EP 0 674 121 A1 oder DE 10 2008 033267 A1 offenbaren Kraftübertragungsriemen gemäß dem Oberbegriff des Anspruchs 1.

Es ist daher die Aufgabe der vorliegenden Erfindung, einen Kraftübertragungsriemen bereitzustellen, dessen elastischer Grundkörper aus wenigstens einer Kautschukmischung mit hoher Härte und geringer Mischungsviskosität besteht, um dadurch zum Einen ein gutes Ausformungsverhalten und gleichzeitig eine lange Lebensdauer zu gewährleisten. Die Härte, gemessen als Shore A, sollte hierbei bevorzugt größer als 85 und die Viskosität bevorzugt kleiner als 2000 Pa*s sein.

Gelöst wird diese Aufgabe dadurch, dass der Grundkörper aus einer zumindest teilvulkanisierten Kautschukmischung besteht, die wenigstens eine Kautschukkomponente und wenigstens einen Füllstoff und wenigstens einen Reaktivverdünner gemäß DIN 55945:2007-03 enthält, wobei der Reaktivverdünner gemäß DIN 55945:2007-03 Urethanacrylat (UA) ist und wobei die Kautschukkomponente ein Nitrilkautschuk ist, der teilweise oder vollständig hydriert ist, und wobei als Füllstoff eine Mischung aus Ruß und Kieselsäure verwendet wird.

Überraschenderweise wurde gefunden, dass Kautschukmischungen für den Grundkörper eines Kraftübertragungsriemens eine hohe Härte und gleichzeitig eine sehr niedrige Viskosität und dadurch bedingt ein gutes Fließverhalten zeigen, wenn in der Kautschukmischung wenigstens Urethanacrylat (UA) als Reaktivverdünner gemäß DIN 55945:2007-03 verwendet wird.

Die Kautschukmischung des Grundkörpers enthält wenigstens eine Kautschukkomponente, die ein Nitrilkautschuk ist, der teilweise oder vollständig hydriert ist.

Als Kautschukkomponente wird insbesondere (teil)hydrierter Nitrilkautschuk (HNBR) eingesetzt, der unverschnitten oder mit wenigstens einer weiteren Kautschukkomponente, insbesondere mit einem der Ethylen-Propylen (EPM), Ethylen-Propylen-Dien (EPDM), Fluor (FKM), Natur (NR), Styrol-Butadien (SBR) oder Butadien (BR) Kautschuktypen, verschnitten ist, beispielsweise in Form eines EPM/EPDM- oder SBR/BR-Verschnittes.

Als thermoplastische Elastomere (TPE) können prinzipiell alle der fachkundigen Person bekannte TPE verwendet werden. Hervorzuheben sind hierbei thermoplastische Elastomere auf Olefin-Basis (TPO), Styrol-Triblock-Copolymere (SBS, SIS, SBC), thermoplastischer Nitrilkautschuk (TP-NBR), thermoplastischer Naturkautschuk (TP-NR), thermoplastischer Fluorkautschuk (TP-FKM), thermoplastischer Silikonkautschuk (TP-Q), thermoplastische Polyurethane (TPU), copolymere Polyetherester (CPE, CPA), Polyether-Blockamide (PEBA) oder Melt Processible Rubber (MPR).

Die TPE können auch im Verschnitt mit einem oder mehreren Elastomeren eingesetzt werden.

Die Kautschukmischung des Grundkörpers enthält weiterhin wenigstens einen Füllstoff. Hierbei handelt es sich um eine Mischung aus Ruß und Kieselsäure. Es können hierbei alle in der Kautschukindustrie bekannten Kieselsäuren, vorzugsweise Fällungskieselsäuren, verwendet werden. Ebenso können alle bekannten Rußtypen, insbesondere Furnace- und Thermalruße, wie SAF, SCF, HAF, FF, FEF, XCF, HMF, GPF, SRF, MPF, FT oder MT verwendet werden, wobei FEF-Ruße besonders bevorzugt sind.

Der Reaktivverdünner gemäß DIN 55945:2007-03 ist ausgewählt aus der Gruppe der Methacrylate und / oder der Acrylate und / oder Vinylether und / oder Glycidylether, wobei Methacrylate und / oder Acrylate besonders bevorzugt sind.

Werden Acrylate verwendet, so haben diese bevorzugt Isocyanatgruppen. Ebenso sind difunktionelle Gruppen am Kettenende des Reaktivverdünners bevorzugt.

Erfindungsgemäß handelt es sich bei dem Reaktivverdünner um Urethanacrylat (UA) allein oder in Kombination mit Dipropylenglycoldiacrylat (DPGDA) und / oder Tripropylenglycoldiacrylat (TPGDA) und / oder Hexandioldiacrylat (HDDA), bevorzugt Hexan-1,6-dioldiacrylat (1,6-HDDA) und / oder Trimethylpropantriacrylat (TMPTA) und / oder Diurathendimethacrylat (HEMA-MDI).

Durch die Verwendung von Urethanacrylat wird zusätzlich die Polarität der Mischung vergrößert, wodurch die Quellung des Kraftübertragungsriemens in unpolaren Medien verringert wird.

Es hat sich als vorteilhaft gezeigt, wenn der genannte Reaktivverdünner in Mengen von 0,1 bis 30 bevorzugt in Mengen von 0,5 bis 25 Gew. -%, besonders bevorzugt in Mengen von 1 bis 20 Gew. -% eingesetzt wird.

Der Reaktivverdünner kann hierbei auch Lösemittel enthalten. Die Mengenangaben beziehen sich in diesem Fall auf Reaktivverdünner inklusive Lösemittel.

Die in dieser Schrift verwendete Mengenangabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen.

Die Mischungsingredienzien der Kautschukmischung umfassen zusätzlich wenigstens einen Vernetzer oder ein Vernetzersystem (Vernetzungsmittel und Beschleuniger). Weitere Mischungsingredienzien sind zumeist noch Verarbeitungshilfsmittel und/oder Weichmacher und/oder Alterungsschutzmittel sowie gegebenenfalls weitere Zusatzstoffe, beispielweise Fasern zwecks Verstärkung, und Farbpigmente. Vorteilhafterweise sind der Kautschukmischung gleichmäßig verteilt Fasern aus Aramid, Baumwolle, Kohle oder Zellulose beigemischt, wobei Aramidfasern, insbesondere wiederum para-Aramidfasern, bevorzugt eingesetzt werden. Diesbezüglich wird auf den allgemeinen Stand der Kautschukmischungstechnologie verwiesen.

Üblicherweise werden Kraftübertragungsriemen peroxidisch vernetzt, wobei alle der fachkundigen Person bekannten peroxidischen Vernetzungsmittel und Vernetzungshilfsmittel verwendet werden können. Es ist aber durchaus möglich, andere Arten der Vernetzung, wie beispielsweise Strahlenvernetzung, heranzuziehen.

Etwaige Festigkeitsträger, oft als Zugstränge ausgebildet, die im Kraftübertragunsgsriemen vorhanden sein können, bestehen aus Stahl, Polyamid, Aramid, Polyester, Glasfasern, Kohlefasern, Polyetherketon (PEEK) oder Polyethylen-2,6-naphthalat (PEN).
Eine mögliche Textilauflage besteht vorteilhafterweise aus einem Gewebe, Gewirke oder Gestrick. Bevorzugt findet als Material für das Gewebe, Gewirke oder Gestrick Baumwolle oder weitere Naturfasern, wie beispielsweise Flachs, Leinen oder Hanf Verwendung. Ebenso kann aber auch Aramid, Nylon und / oder Polyester verwendet werden. Die Textilauflage kann zusätzlich separat mit einer Beschichtung versehen sein, welche einen Reaktivverdünner gemäß DIN 55945:2007-03 enthält.
Ebenso kann die Kautschukmischung des elastischen Grundkörpers einen derartigen Reaktivverdünner enthalten.

Der Kraftübertragungsriemen findet Verwendung als Flachriemen, Keilriemen, Keilrippenriemen und Zahnriemen, wobei letzterer besonders bevorzugt ist.
In einer besonders bevorzugten Ausführungsform ist der Kraftübertragungsriemen mit wenigstens einer Beschichtung versehen. Vor allem die Kraftübertragungszone und / oder die Decklage können jeweils mit einer Beschichtung versehen sein, wobei der Riemen auch vollständig mit der Beschichtung ummantelt sein kann. Eine derartige Beschichtung wird unter anderem dann aufgebracht, wenn beispielsweise zusätzlich besondere Anforderung an Abrieb, Geräuschreduzierung oder Ölbeständigkeit bestehen.

Die Erfindung wird nun anhand von Versuchsbeispielen näher vorgestellt werden. Die Tabellen 1a und 2a zeigen die entsprechenden Kautschukzusammensetzungen des Grundkörpers auf, während in den Tabellen 1b und 2b die Versuchsergebnisse dargestellt sind. Vergleichsmischungen, die aus dem Stand der Technik bekannt sind, sind mit "V" gekennzeichnet, während erfindungsgemäße Zusammensetzungen mit "E" gekennzeichnet sind.
Den Ergebnissen der Tabellen 1b und 2b lagen folgende Prüfvorschriften zugrunde:
- Shore-A-Härte gemäß DIN 53 505
- Festigkeit, Dehnung und Spannungswert bei 50% Dehnung gemäß DIN 53 504, DIN 53455, DIN 53571
- Relativer Vernetzungsgrad von 10% (t10 Anvulkanisationszeit) und 90% (t90, Ausvulkanisationszeit) und Drehmoment Fa bzw. Fe mittels rotorlosem Vulkameter (MDR = Moving Disc Rheometer) gemäß DIN 53 529
- Mooney-Viskosität gemäß ASTM D1646
- Viskosität mittels Rheotester (Fa. Göttfert), Düse: 1mm, Kanallänge: 12,0 mm; Stempelgeschwindigkeit: 0,63mm/s; Temperatur: 80°C

**Tabelle 1a**

| **Mischungsbestandteile** | **V1** | **V2** |
|---|---|---|
| HNBR (a) | 60 | 60 |
| HNBR (b) | 40 | 40 |
| Ruß (c) | 15 | 15 |
| Kieselsäure (d) | 15 | 15 |
| Fasern (e) | 5 | 5 |
| Reaktiwerdünner (f) | -- | 10 |
| Stearinsäure | 1 | 1 |
| Weichmacher (g) | 7 | 7 |
| Zinkoxid | 5 | 5 |
| Antioxidanz (h) | 2 | 2 |
| Vulkanisationsmittel (i) | 2 | 2 |
| Vulkanisationsmittel (j) | 6 | 8 |

| | | |
|---|---|---|
| (a) Zetpol® 2011, Fa. Zeonchemicals (b) HNBR modifiziert mir Zn-Methacrylat, Zeoforte® ZSC 2295, Fa. Zeonchemicals (c) N550 (d) Ultrasil® VN3, Fa. Evonik Degussa (e) 3 mm para-Aramidfasern (z.B. Twaron®-Fasern oder Technora®-Fasern) (f) Hexandioldiacrylat (HDDA), Laromer® HDDA, Fa. BASF (g) Di-(2-ethylhexyl)-sebacat, Edenol® 888, Fa. Emery Oleochemicals GmbH (h) 4,4'-Bis(a,a-dimethylbenzyl)-diphenylamine, Naugard® 445, Fa. Chemtura (i) Zinksalz von 4- und 5-methyl-2-mercapto-benzimidazol (ZMMBI), Vulkanox® ZMB2, Fa. Lanxess (j) Di(tert-butylperoxyisopropyl)benzol, Perkadox® 1440, Fa. Akzo | | |

**Tabelle 1b**

| **Eigenschaften** | **[Einheit]** | **V1** | **V2** |
|---|---|---|---|
| **MDR 2000, 180 °C** | | | |
| Fa | dNm | 1,65 | 1,13 |
| Fe | dNm | 38,42 | 69,04 |
| Fe - Fa | dNm | 36,77 | 67,91 |
| t10 | min | 0,36 | 0,28 |
| t90 | min | 4,29 | 4,84 |
| Mooney M_{L} (1+4) bei 100°C | | 79 | 42 |
| Viskosität | Pa*s | 2800 | 1730 |

| **20 min, 180 °C Heizzeit** | | | |
|---|---|---|---|
| Härte | Shore A | 85 | 93 |
| Festigkeit (längs) | MPA | 15,4 | 19,5 |
| Festigkeit (quer) | MPA | 15,8 | 16,4 |
| Dehnung (längs) | % | 177 | 57 |
| Dehnung (quer) | % | 264 | 121 |
| Spannungswert (50 %) (längs) | MPa | 15,2 | 19,3 |
| Spannungswert (50 %) (quer) | MPa | 6,1 | 9,3 |

**Tabelle 2a**

| **Mischungsbestandteile** | **V1** | **E1** | **V3** |
|---|---|---|---|
| HNBR (i) | 60 | 60 | 60 |
| HNBR (ii) | 40 | 40 | 40 |
| Ruß (iii) | 15 | 15 | 15 |
| Kieselsäure (iv) | 15 | 15 | 15 |
| Fasern (v) | 5 | 5 | 5 |
| Reaktivverdünner (vi) | -- | 10 | -- |
| Reaktivverdünner (vii) | -- | -- | 10 |
| Stearinsäure | 1 | 1 | 1 |
| Zinkoxid | 5 | 5 | 5 |
| Antioxidanz (viii) | 2 | 2 | 2 |
| Vulkanisationsmittel (ix) | 2 | 2 | 2 |
| Vulkanisationsmittel (x) | 6 | 8 | 8 |

| | | | |
|---|---|---|---|
| (i) Zetpol® 2011, Fa. Zeonchemicals (ii) HNBR modifiziert mir Zn-Methacrylat, Zeoforte® ZSC 22295, Fa. Zeonchemicals (iii)N550 (iv)Ultrasil® VN3, Fa. Evonik Degussa (v) 3 mm para-Aramidfasern (z.B. Twaron®-Fasern oder Technora®-Fasern) (vi)aliphatisches Urethanacrylat, 65%ig gelöst in Tripropylenglycoldiacrylat (TPGDA), Laromer® UA 19 T, Fa. BASF (vii) ungesättigtes Polyesterharz, 55%ig gelöst in Dipropylenglycoldiacrylat (DPGDA), Laromer® UP 35 D, Fa. BASF (viii) 4,4'-Bis(a,a-dimethylbenzyl)-diphenylamine, Naugard® 445, Fa. Chemtura (ix)Zinksalz von 4- und 5-methyl-2-mercapto-benzimidazol (ZMMBI), Vulkanox® ZMB2, Fa. Lanxess (x) Di(tert-butylperoxyisopropyl)benzol, Perkadox® 1440, Fa. Akzo | | | |

**Tabelle 2b**

| **Eigenschaften** | **[Einheit]** | **V1** | **E1** | **V3** |
|---|---|---|---|---|
| **MDR 2000, 180 °C** | | | | |
| Fa | dNm | 1,65 | 1,26 | 1,33 |
| Fe | dNm | 38,42 | 53,55 | 61,42 |
| Fe - Fa | dNm | 36,77 | 52,29 | 60,09 |
| t10 | min | 0,36 | 0,31 | 0,30 |
| t90 | min | 4,29 | 4,87 | 4,77 |
| Mooney M_{L} (1+4) bei 100°C | | 79 | 49 | 50 |
| Viskosität | Pa*s | 2800 | 1834 | 1962 |

| **20 min. 180 °C Heizzeit** | | | | |
|---|---|---|---|---|
| Härte | Shore A | 85 | 91 | 92 |
| Festigkeit (längs) | MPA | 15,4 | 17,3 | 18,3 |
| Festigkeit (quer) | MPA | 15,8 | 16,5 | 17,8 |
| Dehnung (längs) | % | 177 | 141 | 76 |
| Dehnung (quer) | % | 264 | 194 | 177 |
| Spannungswert (50 %) (längs) | MPa | 15,2 | 17,3 | 18,1 |
| Spannungswert (50 %) (quer) | MPa | 6,1 | 7,3 | 7,6 |

Aus den Ergebnissen der Tabellen 1b und 2b wird deutlich, dass das Hinzufügen eines Reaktivverdünners gemäß DIN 55945:2007-03 zu der Kautschukmischung für den Grundkörper zu einer signifikanten Erhöhung der Härte, dargestellt als Shore A-Härte, führt. Gleichzeitig wirkt ein derartiger Reaktiwerdünner als Weichmacher in der Kautschukmischung und zwar dahingehend, dass er die Mischungsviskositäten (siehe Mooney-Viskosität und vor allem Viskoelastomerdaten) deutlich reduziert. Dadurch wird ein gutes Ausformungsverhalten bei gleichzeitig langer Lebensdauer gewährleistet.

Die Erfindung wird nun anhand von Ausführungsbeispielen unter Bezugnahme auf schematische Zeichnungen erläutert. Es zeigen:
- Fig. 1: eine dreidimensionale Darstellung eines Zahnriemens mit Draufsicht auf die Kraftübertragungszone;
- Fig. 2: einen Längsschnitt durch einen Zahnriemen mit einer Schutzschicht für die Kraftübertragungszone und für den Riemenrücken.

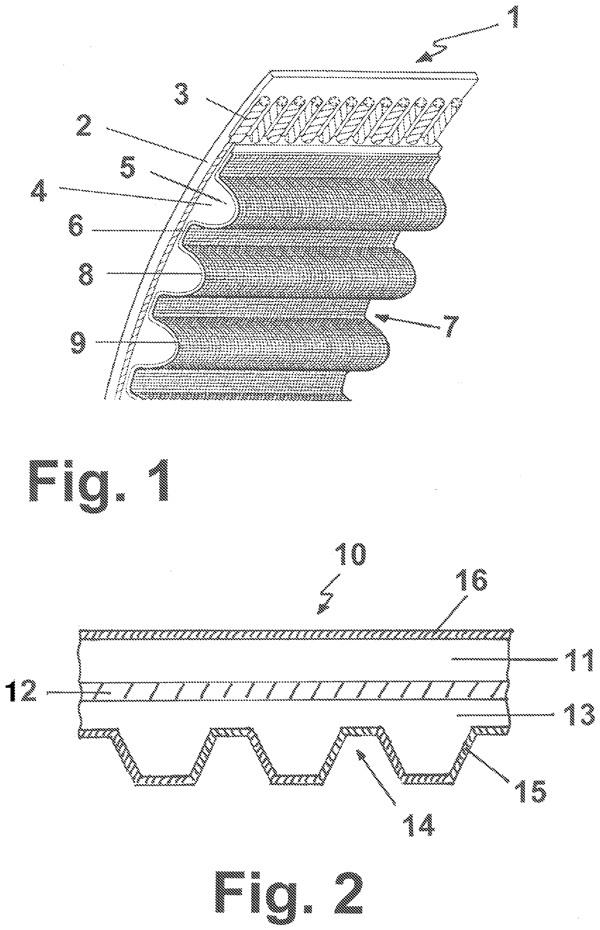

Fig. 1 zeigt einen Kraftübertragungsriemen 1 in Form eines Zahnriemens mit einer Decklage 2 als Riemenrücken, mit mehreren eingebetteten und parallel verlaufenden Zugsträngen 3 als Festigkeitsträger sowie mit einem Unterbau 4. Die Decklage und der Unterbau bilden dabei als Gesamteinheit den elastischen Grundkörper, der aus einem Vulkanisat auf Basis eines HNBR und eines modifizierten HNBR, Ruß und Kieselsäure als Füllstoff und eines Reaktivverdünners gemäß DIN 55945:2007-03 besteht. Die Zugstränge bestehen aus Stahl, Polyamid, Aramid, Polyester, Glasfasern, Kohlefasern, Polyetheretherketon (PEEK) oder Polyethylen-2,6-naphthalat (PEN).

Der Unterbau 4 ist mit einer zahnförmigen Profilierung, umfassend Zähne 5 und Zahnstege 6, versehen und bildet die Kraftübertragungszone 7, die besonders verschleißanfällig ist durch Abrieb, Hitze und den Einfluss durch Öle. Aus diesem Grunde ist bereits vorgeschlagen worden, die Kraftübertragungszone mit einer Textilauflage 8, beispielsweise in Form eines Gewebes, Gewirkes oder Gestrickes, zu versehen. Diese Gewebeauflage wird nach der Lehre des Dokumentes WO 2005/080821 A1 zusätzlich mit einem fluorhaltigen Kunststoff, der insbesondere PTFE ist, getränkt, und zwar bei einem hohen Füllungsgrad dieses Kunststoffes, wobei gleichzeitig eine Polymerbeschichtung (Versiegelung) als zusätzliche Schutzschicht 9 gebildet wird. Die beiden Teilschichten 8 und 9 mit unterschiedlichen Funktionen treten hier als gemeinsame Schutzschicht auf.

Der Kraftübertragungsriemen 10 nach Fig. 2, wiederum in Form eines Zahnriemens, umfasst eine Decklage 11 als Riemenrücken, Zugstränge 12 und einen Unterbau 13 mit einer zahnförmigen Kraftübertragungszone 14, Die Kraftübertragungszone wie auch der Riemenrücken ist mit einer Schutzschicht 15 bzw. 16 versehen.

Eine derartige Schutzschicht kann beispielsweise aus Polyurethan, aus einem fluorhaltigen Kunststoff, der insbesondere Polytetrafluorethylen (PTFE), Polyvinylfluorid (PVF) oder Polyvinylidenfluorid (PVDF) oder aus einem Gemisch der genannten bestehen

Die Schutzschichten 15 und 16 können dabei wie bei der Ausführung nach der WO 2005/080821 A1 in Verbindung mit einer Textilauflage, beispielsweise eines Gewebes, stehen oder aber auch in Form von Folien oder eines Folienverbundes eingesetzt werden, und zwar insbesondere ohne Einsatz einer Textilauflage. Diesbezüglich wird insbesondere auf die neuere Entwicklung gemäß DE 10 2008 012 044.8 verwiesen.

Derartige Schutzschichten kommen insbesondere bei Hochleistungszahnriemen zur Anwendung.

### Bezugszeichenliste

### (Teil der Beschreibung)

- 1: Kraftübertragungsriemen (Zahnriemen)
- 2: Decklage als Riemenrücken
- 3: Festigkeitsträger in Form von Zugsträngen
- 4: Unterbau
- 5: Zahn
- 6: Zahnsteg
- 7: Kraftübertragungszone
- 8: Textilauflage (Zahnauflage)
- 9: Schutzschicht
- 10: Kraftübertragungsriemen (Zahnriemen)
- 11: Decklage als Riemenrücken
- 12: Festigkeitsträger in Form von Zugsträngen
- 13: Unterbau
- 14: Kraftübertragungszone
- 15: Schutzschicht für die Kraftübertragungszone
- 16: Schutzschicht für den Riemenrücken

## Patentansprüche

1. Kraftübertragungsriemen (1, 10) mit einem elastischen Grundkörper, umfassend eine Decklage (2, 11) als Riemenrücken und einen Unterbau (4, 13) mit einer Kraftübertragungszone (7, 14), wobei der Grundkörper aus einer zumindest teilvulkanisierten Kautschukmischung besteht, die wenigstens eine Kautschukkomponente und wenigstens einen Füllstoff und wenigstens einen Reaktivverdünner gemäß DIN 55945:2007-03 enthält, und wobei die Kautschukkomponente ein Nitrilkautschuk ist, der teilweise oder vollständig hydriert ist, und wobei als Füllstoff eine Mischung aus Ruß und Kieselsäure verwendet wird,
**dadurch gekennzeichnet, dass** der Reaktivverdünner gemäß DIN 55945:2007-03 Urethanacrylat (UA) ist.

2. Kraftübertragungsriemen nach Anspruch 1, **dadurch gekennzeichnet, dass** die Kautschukmischung 0,1 bis 30 phr eines Reaktivverdünners gemäß DIN 55945:2007-03 enthält.

3. Kraftübertragungsriemen nach einem der Ansprüche 1 bis 2, **dadurch gekennzeichnet, dass** in die Kautschukmischung Fasern eingemischt sind.

4. Kraftübertragungsriemen nach einem der Ansprüche 1 bis 3, **dadurch gekennzeichnet, dass** die Kraftübertragungszone (7, 14) und / oder die Decklage (2, 11) mit einer zusätzlichen Beschichtung (8, 9, 15, 16) versehen ist / sind.

5. Kraftübertragungsriemen nach einem der Ansprüche 1 bis 4, **dadurch gekennzeichnet, dass** der Antriebsriemen (1, 10) als Zahnriemen ausgebildet ist.

## Claims

1. Force-transmission belt (1, 10) with an elastic belt body, comprising an outer layer (2, 11) as belt backing and comprising an underside (4, 13) with a force-transmission zone (7, 14), where the belt body consists of an at least partially vulcanized rubber mixture which comprises at least one rubber component and at least one filler and at least one reactive diluent in accordance with DIN 55945:2007-03,
and where the
rubber component is a partially or fully hydrogenated nitrile rubber, and where a mixture of carbon black and silica is used as filler, **characterized in that** the reactive diluent in accordance with DIN 55945:2007-03 is urethane acrylate (UA).

2. Force-transmission belt according to Claim 1, **characterized in that** the rubber mixture comprises 0.1 to 30 phr of a reactive diluent in accordance with DIN 55945:2007-03.

3. Force-transmission belt according to either of Claims 1 to 2, **characterized in that** fibres have been mixed into the rubber mixture.

4. Force-transmission belt according to any of Claims 1 to 3, **characterized in that** an additional coating (8, 9, 15, 16) has been provided to the force-transmission zone (7, 14) and/or the outer layer (2, 11).

5. Force-transmission belt according to any of Claims 1 to 4, **characterized in that** the drive belt (1, 10) is configured as toothed belt.

## Revendications

1. Courroie de transfert de force (1, 10) dotée d'un corps de base élastique, comprenant une couche de recouvrement (2, 11) en tant que dos de courroie et une fondation (4, 13) dotée d'une zone de transfert de force (7, 14), le corps de base étant constitué d'un mélange de caoutchouc au moins partiellement vulcanisé, qui contient au moins un composant de caoutchouc et au moins une charge et au moins un diluant réactif selon la norme DIN 55945:2007-03, et le composant de caoutchouc étant un caoutchouc de nitrile qui est partiellement ou totalement hydrogéné, et un mélange de suie et de silice étant utilisé en tant que charge, **caractérisée en ce que** le diluant réactif selon la norme DIN 55945:2007-03 est un acrylate d'uréthane (UA) .

2. Courroie de transfert de force selon la revendication 1, **caractérisée en ce que** le mélange de caoutchouc contient 0,1 à 30 phr d'un diluant réactif selon la norme DIN 55945:2007-03.

3. Courroie de transfert de force selon l'une quelconque des revendications 1 et 2, **caractérisée en ce que** des fibres sont mélangées dans le mélange de caoutchouc.

4. Courroie de transfert de force selon l'une quelconque des revendications 1 à 3, **caractérisée en ce que** la zone de transfert de force (7, 14) et/ou la couche de recouvrement (2, 11) est/sont pourvue(s) d'un revêtement supplémentaire (8, 9, 15, 16).

5. Courroie de transfert de force selon l'une quelconque des revendications 1 à 4, **caractérisée en ce que** la courroie d'entraînement (1, 10) est réalisée en tant que courroie dentée.
